# EUROPEAN PATENT APPLICATION

(11) **EP 4 641 135 A1**
(43) Date of publication of application: **29.10.2025**
(21) Application number: 24172391.5
(22) Date of filing: 25.04.2024
(51) Int. Cl.: G01C 19/5776

(54) **SENSOR SYSTEM**

(71) Applicant: Murata Manufacturing Co., Ltd., Nagaokakyo-shi, Kyoto 617-8555 (JP)
(72) Inventor: BLOMQVIST, Anssi, 00980 Helsinki (FI); RYTKÖNEN, Ville-Pekka, 01820 KLAUKKALA (FI); FINNE, Antti, 01610 Vantaa (FI)
(74) Representative: Boco IP Oy Ab

(57) **Abstract**

The disclosure relates to acquiring one-axis angular rate of rotation signals from two gyroscopes, which utilize transducers of different type and/or operate according to different operating principles, and combining two measurement signals in a control unit. An advantage of combining two angular rate of rotation signals from the two gyroscopes is that the combined signal may have better noise density and stability than either gyroscope would provide on its own.

## Description

### FIELD OF THE DISCLOSURE

The present disclosure relates to a sensor system, and particularly to the sensor system comprising a gyroscope.

### BACKGROUND OF THE DISCLOSURE

A gyroscope is a device used to detect and measure changes in angular velocity and orientation of an object. Traditional microelectromechanical (MEMS) gyroscopes contain a mobile proof mass, which usually comprises a part of a silicon wafer. The mobile proof mass is suspended from a fixed element, which is usually a fixed part of the same wafer. The proof mass is connected to force transducers which drive the proof mass into oscillating motion. When the gyroscope is subjected to angular rotation, the Coriolis effect causes the oscillation of the mobile proof mass to be modulated. This modulation of oscillation is directly proportional to the angular rate of the gyroscope and the magnitude of the angular rotation rate can be determined.

The MEMS gyroscopes can be operated with different operating principles. One operating principle is amplitude modulation (AM), which measures a change in the amplitude of the oscillating motion. Another operating principle is frequency modulation (FM), which measures a change in the frequency of the oscillating motion.

In practice, FM gyro is traditionally more stable than AM gyro, because FM gyro measures rate directly as a frequency and use an external precision reference clock. On the contrary, AM gyro has significantly lower noise than FM gyro, since relative frequency change is typically orders of magnitude smaller in FM gyro that amplitude change in similar AM gyro. Both operation principles have same fundamental thermal noise limit. However, in practice AM gyro system and electronics are simpler, and relative signal change due to angular rate is orders of magnitude larger than in FM gyro.

The MEMS gyroscopes may comprise force transducers of different type. Specifically, the MEMS gyroscope may comprise a capacitive transducer which is actuated using electrostatic forces. Alternatively, the MEMS gyroscope may comprise a piezoelectric transducer which comprises a piezoelectric material integrated into it. The AM gyroscope may be implemented with either transducer type. However, AM gyroscopes are prone to signal stability issues.

Likewise, FM gyroscope may be implemented with either transducer type, but they may suffer from high noise of the output signal. In other words, no combination of the transducer type and the operating principle is superior to the others in that it would give both best noise density and best stability.

Conventional sensor systems contain both gyroscopes and accelerometers and can be used, for example, to track the position of a vehicle over time. Due to noise and stability issues discussed above, such sensor systems experience problems tracking the position accurately over time, and often need to be complemented with Global Navigation Satellite System (GNSS), as disclosed in publication US11231442B2. However, GNSS signal is not always available, so improving the properties of signals provided solely by sensor system would help to resolve tracking issues without using supplementary navigation technology.

### BRIEF DESCRIPTION OF THE DISCLOSURE

An object of the present disclosure is to provide a sensor system so as to solve the above problem.

The object of the disclosure is achieved by the sensor system which are characterized by what is stated in the independent claims. Some embodiments of the disclosure are disclosed in the dependent claims.

The disclosure is based on the idea of combining measurement signals from two gyroscopes which utilize transducers of different type and/or operate according to different operating principles. One of the gyroscopes may provide better noise density of the signal, while the other may provide better stability. An advantage of combining the measurement signals from the two gyroscopes is that the combined signal may have better noise density and/or stability than either gyroscope would provide on its own.

### BRIEF DESCRIPTION OF THE DRAWINGS

In the following the disclosure will be described in greater detail by means of preferred embodiments with reference to the accompanying drawings, in which:
Figure 1 illustrates a sensor system of this disclosure comprising a first first-axis gyroscope, a second first-axis gyroscope and a control unit.
Figure 2a illustrates a sensor system which further comprises a first second-axis gyroscope and a first third-axis gyroscope.
Figure 2b illustrates a sensor system which further comprises a second second-axis gyroscope and a second third-axis gyroscope.
Figure 3 illustrates the sensor system which further comprises a three-axis accelerometer.
Figure 4 illustrates the sensor system which further comprises a first application-specific integrated circuit.
Figure 5 illustrates the sensor system which further comprises a second application-specific integrated circuit.
Figure 6a illustrates an example of a gyroscope comprising four piezoelectrically oscillated proof masses which may operate according to either frequency modulated operation principle or amplitude modulated operation principle.
Figure 6b illustrates an example of a gyroscope comprising four capacitively oscillated proof masses which may operate according to either frequency modulated operation principle or amplitude modulated operation principle.

### DETAILED DESCRIPTION OF THE DISCLOSURE

The disclosure relates to a sensor system which comprises two gyroscopes. A microelectromechanical (MEMS) gyroscope usually comprises an oscillating proof mass which is designed to oscillate and responds to rotation. The oscillating proof mass experiences a shift in its oscillation pattern when the gyroscope rotates. The detection of this shift provides information about the magnitude of the rotation rate. The gyroscope generates electrical signals corresponding to this magnitude. These signals are then processed by electronic components within the gyroscope and outside of it.

This disclosure describes a sensor system configured to measure angular rate of rotation about a first axis, comprising a first first-axis gyroscope, which is configured to measure a first angular rate of rotation about the first axis, and generate a first first-axis angular rate of rotation signal W1-1; and a second first-axis gyroscope, which is configured to measure a second angular rate of rotation about the first axis, and generate a second first-axis angular rate of rotation signal W1-2; a control unit, which is configured to retrieve the first first-axis angular rate of rotation signal W1-1 from the first first-axis gyroscope and the second first-axis angular rate of rotation signal W1-2 from the second first-axis gyroscope, and combine them into a combined first-axis angular rate of rotation signal W1, and output the combined angular rate of rotation signal W1; wherein each of the first and the second first-axis gyroscope comprises a transducer of a capacitive type or a piezoelectric type; and wherein each of the first and the second first-axis gyroscope operate according to either frequency modulated operation principle or amplitude modulated operation principle; characterized in that the transducer type of the first first-axis gyroscope is different from the second first-axis gyroscope and/or the operation principle of the first first-axis gyroscope is different from the operation principle of the second first-axis gyroscope.

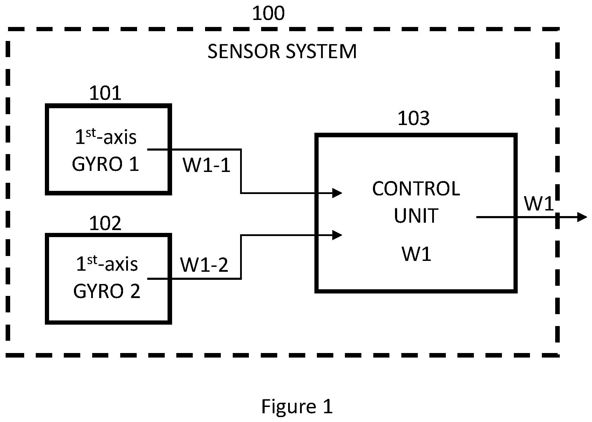

A sensor system 100 of this disclosure, illustrated in Figure 1, is configured to measure angular rate of rotation around a first axis.

The sensor system 100 of this disclosure comprises a first first-axis gyroscope 101. The first first-axis gyroscope 101 is configured to measure a first first-axis angular rate of rotation about the first axis. The first first-axis gyroscope is configured to generate a first first-axis angular rate of rotation signal W1-1. The first first -axis angular rate of rotation signal W1-1 is referred to as *"*W1-1" in this application text.

The sensor system 100 of this disclosure comprises a second first-axis gyroscope 102. The second first-axis gyroscope 102 is configured to measure a second first-axis angular rate of rotation about the first axis. The second first-axis gyroscope 102 is configured to generate a second first-axis angular rate of rotation signal W1-2. The second first-axis angular rate of rotation signal W1-2 may be referred to as *"*W1-2*"* in this application text.

The sensor system 100 of this disclosure comprises a control unit 103. The control unit 103 is configured to retrieve the first first-axis angular rate of rotation signal W1-1 from the first first-axis gyroscope. The control unit 103 is further configured to retrieve the second first-axis angular rate of rotation signal W1-2 from the second first-axis gyroscope. The control unit 103 is further configured to combine W1-1 and W1-2 into a combined first-axis angular rate of rotation signal W1. In other words, the control unit may perform "sensor fusion" process to combine two signals W1-1 and W1-2 together into signal W1. Specifically, two signals W1-1 and W1-2 may be combined by a Kalman filter, by summing them together, or by using more complex filter such as a navigation Extended Kalman filter. The combined first-axis angular rate of rotation signal W1 may be referred to as *"*W1*"* in this application text. The control unit 103 is further configured to output the combined first-axis angular rate of rotation signal W1.

The signals W1-1 and W1-2 may be directly retrieved by the control unit 103 from the first first-axis gyroscope 101 and the second first-axis gyroscope 102. Alternatively, the signals W1-1 and W1-2 may be processed by an additional unit, such as an integrated circuit, prior to retrieval by control unit 103. Such arrangement is discussed later in this disclosure.

The control unit 103 may be a microcontroller unit (MCU). The control unit 103 may be a Field Programmable Gate Array (FPGA).

### Piezoelectric and capacitive transducer

The gyroscopes described in this disclosure comprise drive transducers which can be used to drive the oscillating motion of a proof mass and sense transducers which can be used to detect how the Coriolis force changes the oscillation when the gyroscope experiences rotation about an axis. In some embodiments, the same transducer may be used as both a drive transducer and sense transducer. Alternatively, the drive and sense transducers are different transducers.

Both the first and the second first-axis gyroscopes 101-102 comprise at least one transducer. The transducer may be of a capacitive type. Alternatively, the transducer may be of a piezoelectric type. In other words, each of the first and the second first-axis gyroscope may comprise piezoelectric or capacitive transducer. The transducer of capacitive type may also be called "transducer of electrostatic type". Accordingly, the capacitive transducer may be called "electrostatic transducer".

Each gyroscope described in this disclosure may comprises a set of drive transducers and a set of sense transducers. Each set may include more than one transducer. All transducers in these sets of drive and sense transducers may be of capacitive type. Alternatively, all transducers in these sets of drive and sense transducers may be of piezoelectric type. Alternatively, all transducers in the sets of drive transducers may be of capacitive type and all transducers in the sets of sense transducers may be piezoresistive type.

The capacitive type and piezoelectric type of transducers are described in detail below:
1) Gyroscope with the capacitive transducer is a type of gyroscope that uses the principles of capacitance to measure and detect changes in angular velocity or rotation. The proof mass of the gyroscope with capacitive type of transducer may be actuated using electrostatic forces. Electrostatic forces may be generated by applying a voltage difference between the proof mass and stationary electrodes. This voltage difference may cause the proof mass to oscillate. When the device is subjected to rotation, the Coriolis effect causes the oscillation of the proof mass to be modulated, and this modulation can be measured with a capacitive transducer. This modulation may be directly proportional to the angular rate of the gyroscope.
2) Gyroscope with the piezoelectric transducer is a type of gyroscope that may utilize the piezoelectric effect to measure and detect changes in angular velocity. The proof mass or the surrounding structure of the gyroscope with the piezoelectric type of transducer may comprise a piezoelectric material integrated onto a bendable beam which is connected to the proof mass. When a voltage is applied over the piezoelectric material, the piezoelectric transducer drives the proof mass into oscillating motion. When the gyroscope is subjected to rotation, the Coriolis force may cause the piezoelectric material in the piezoelectric transducer to deform, generating voltage proportional to the angular velocity. The voltage signal generated by the piezoelectric transducer may then be detected and processed.

Any transducer of this disclosure may be a drive transducer which drives a proof mass into oscillating motion. Alternatively, any transducer of this disclosure may be a sense transducer which measures the oscillating motion of the proof mass. In some gyroscopes, the transducer may be both the drive transducer and the sense transducer. In other words, the structure of the transducer may allow both driving the proof mass into oscillating motion and sensing its motion.

Any statement such as "a gyroscope comprises a transducer of type X" may mean that both the drive transducers and the sense transducers in that gyroscope are of type X. The sense transducer of capacitive type may measure the capacitance change when the gap between the proof mass and the stationary electrodes changes when the proof mass oscillation is modulated.

The sense transducer of piezoelectric type may measure the electric charge generated by the piezoelectric material when it is deformed.

### AM and FM operation principle

Both the first and the second first-axis gyroscopes operate according to either frequency modulated operation principle or amplitude modulated operation principle. In other words, the first first-axis gyroscope may be frequency modulated gyroscope or amplitude modulated gyroscope, and the second first-axis gyroscope may be frequency modulated gyroscope or amplitude modulated gyroscope. The two modulation principles of operation are described in detail below:
1) The first and/or the second first-axis gyroscope(s) may operate according to amplitude modulated operation principle. The term "amplitude modulated operation principle of the gyroscope" may refer to the gyroscope which outputs a signal that represents the angular rate based on the amplitude modulation of the proof mass oscillation. Specifically, the transducer may comprise drive transducer which may drive the proof mass into drive oscillation, which may be either linear or rotational motion. When the gyroscope undergoes angular rotation about a rotation axis, the Coriolis force acts on the proof mass and induces sense oscillation. The direction of the Coriolis force, and therefore the direction in which sense oscillation occurs, is perpendicular both to the rotation axis and to the direction of drive oscillation. The transducers may comprise sense transducers, which measure the sense oscillation. The amplitude of the sense oscillation is proportional to the product of (1) the amplitude of drive oscillation, which is known, and (2) to the magnitude of angular rotation, which is the variable being measured. The amplitude modulated operation principle may be implemented with the gyroscope which comprises a transducer of either a capacitive type or a piezoelectric type.
2) The first and/or the second first-axis gyroscope(s) may operate according to frequency modulated operation principle. The term "frequency modulated operation principle of the gyroscope" may refer to the gyroscope which outputs a signal that represents the angular rate based on the frequency modulation of the proof mass oscillation. Specifically, the transducer may comprise drive transducers which may be configured to actuate the proof mass system into periodic first and second oscillation modes with nominally equal amplitudes. Alternatively, the transducer may comprise drive transducers which may be configured to actuate the proof mass system into circular first and second oscillation modes with close amplitudes with 90 degrees phase shift. The periodic oscillation in the first and second oscillation modes has an initial oscillation frequency when the gyroscope is stationary. The initial oscillation frequency is measured with sense transducers. When the gyroscope undergoes angular rotation about a rotation axis, the Coriolis force shifts the oscillation frequency away from this initial value. The shift can be measured, and it is proportional to the magnitude of angular rotation. The frequency modulated operation principle may be implemented with the gyroscope which comprises a transducer of either a capacitive type or a piezoelectric type.

For example, the gyroscope with the amplitude modulated operation principle provides signal with low noise but with stability issues caused by, for example, temperature or lifetime drifts. In contrast, the gyroscope with frequency modulated operation principle provides inherently stable signal which, however, suffers from high noise. Thus, combining two different gyroscopes with these features in one axis orientation measurement may provide signal with optimized noise and stability properties. In other words, one-axis orientation measurement signal with optimized noise and stability properties may be obtained by combining 1) the signal from the gyroscope with the capacitive transducer and the amplitude modulated operation principle and 2) the signal from the gyroscope with piezoelectric transducer and the frequency modulated operation principle. Potential combinations of the first and the second first-axis gyroscopes are explained below.

The gyroscope with the capacitive transducer may be operated with the amplitude modulated operation principle. Alternatively, the gyroscope with the capacitive transducer may be operated with the frequency modulated operation principle. The gyroscope with the piezoelectric transducer may be operated with the frequency modulated operation principle. Alternatively, the gyroscope with the piezoelectric transducer may be operated with the amplitude modulated operation principle.

### Sensor system examples

The sensor system, wherein the transducer type of the first first-axis gyroscope is same as the transducer type of the second first-axis gyroscope, and the operation principle of the first first-axis gyroscope is different from the operation principle of the second first-axis gyroscope.

The sensor system, wherein the transducer type of the first first-axis gyroscope is different from the transducer type of the second first-axis gyroscope, and wherein the operation principle of the first first-axis gyroscope is same as the operation principle of the second first-axis gyroscope.

The sensor system, wherein the transducer type of the first first-axis gyroscope is different from the transducer type of the second first-axis gyroscope, and wherein the operation principle of the first first-axis gyroscope is different from the operation principle of the second first-axis gyroscope.

The sensor system, wherein the transducer type of the first first-axis gyroscope is capacitive and the transducer type of the second first-axis gyroscope is piezoelectric, and wherein the operation principle of the first first-axis gyroscope is amplitude modulated and the operation principle of the second first-axis gyroscope is frequency modulated.

In other words, any of the following examples A - F may be implemented.
A. The transducer type of the first first-axis gyroscope may be capacitive and or the operation principle of the first first-axis gyroscope may be amplitude modulated. The transducer type of the second first-axis gyroscope may be capacitive and the operation principle of the second first-axis gyroscope may be frequency modulated.
B. The transducer type of the first first-axis gyroscope may be piezoelectric and or the operation principle of the first first-axis gyroscope may be amplitude modulated. The transducer type of the second first-axis gyroscope may be piezoelectric and the operation principle of the second first-axis gyroscope may be frequency modulated.
C. The transducer type of the first first-axis gyroscope may be capacitive and or the operation principle of the first first-axis gyroscope may be amplitude modulated. The transducer type of the second first-axis gyroscope may be piezoelectric and the operation principle of the second first-axis gyroscope may be frequency modulated.
D. The transducer type of the first first-axis gyroscope may be piezoelectric and or the operation principle of the first first-axis gyroscope may be amplitude modulated. The transducer type of the second first-axis gyroscope may be capacitive and the operation principle of the second first-axis gyroscope may be frequency modulated.
E. The transducer type of the first first-axis gyroscope may be capacitive and or the operation principle of the first first-axis gyroscope may be amplitude modulated. The transducer type of the second first-axis gyroscope may be piezoelectric and the operation principle of the second first-axis gyroscope may be amplitude modulated.
F. The transducer type of the first first-axis gyroscope may be capacitive and or the operation principle of the first first-axis gyroscope may be frequency modulated. The transducer type of the second first-axis gyroscope may be piezoelectric and the operation principle of the second first-axis gyroscope may be frequency modulated.

For illustrative purposes, Table 1 summarizes the above-mentioned examples.

**Table 1. Sensor system examples**

| Example # | GYRO 1 | GYRO 2 |
|---|---|---|
| | transducer type + operation principle | transducer type + operation principle |
| Example A | Capacitive + AM | Capacitive + FM |
| Example B | Piezoelectric + AM | Piezoelectric + FM |
| Example C | Capacitive + AM | Piezoelectric + FM |
| Example D | Piezoelectric + AM | Capacitive + FM |
| Example E | Capacitive + AM | Piezoelectric + AM |
| Example F | Capacitive + FM | Piezoelectric + FM |

### Signal properties

The sensor system, wherein a noise density of the first angular rate of rotation signal W1-1 is 20% or less than the noise density of the second angular rate of rotation signal W1-2; and the bias error of the second angular rate of rotation signal W1-2 is at least 5 times less than the bias error of the first angular rate of rotation signal W1-1.

The noise density of the signal may be defined as the amount of random electrical fluctuations present per unit bandwidth in the signal. Noise density is a measure of how much noise is present within a specific frequency range. Noise is unwanted or random fluctuations in voltage or current that can affect the quality of the signal. Thus, the lowest amount of noise in the signal is preferred. Noise density of the first angular rate of rotation signal W1-1 may be smaller than of the second angular rate of rotation signal W1-2. Specifically, noise density of the first angular rate of rotation signal W1-1 may be 20% or less than noise density of the second angular rate of rotation signal W1-2.

Alternatively, noise indicators such as signal-to-noise ratio or angle random walk (ARW) may be used to define the noise of the signals W1-1 and W1-2.

Bias error may refer to a systematic or constant deviation between the measured or observed value and the true or expected value. It is a type of error that remains consistent across multiple measurements and is not influenced by random fluctuations or noise. Bias errors can arise from various sources, including inaccuracies in sensors, calibration issues, offset errors, or imperfections in the measurement equipment. Bias error of the second angular rate of rotation signal W1-2 may be less than of the first angular rate of rotation signal W1-1. Specifically, bias error of the second angular rate of rotation signal W1-2 may be five times less than bias error of the first angular rate of rotation signal W1-1.

The sensor system, wherein the sensor system is also configured to measure angular rate of rotation about a second axis and a third axis, and the sensor system further comprises a first sensor unit, wherein the first sensor unit comprises a first second-axis gyroscope, which is configured to measure a first angular rate of rotation about a second axis, and to generate a first second-axis angular rate of rotation signal W2-1; a first third-axis gyroscope, which is configured to measure a first angular rate of rotation about a third axis, and to generate a first third-axis angular rate of rotation signal W3-1; and the first first-axis gyroscope; a second sensor unit, wherein the second sensor unit comprises the second first-axis gyroscope; a control unit, which is configured to retrieve the first second-axis angular rate of rotation signal W2-1, the first third-axis angular rate of rotation signal W3-1 and the first first-axis angular rate of rotation signal W1-1 from the first sensor unit, and the second first-axis angular rate of rotation signal W1-2 from the second sensor unit, and to combine the signals W1-1 and W1-2 into the combined first-axis angular rate of rotation signal W1, and to output the signals W1, W3-1 and W2-1; and wherein the first axis, the second axis and the third axis are orthogonal to each other.

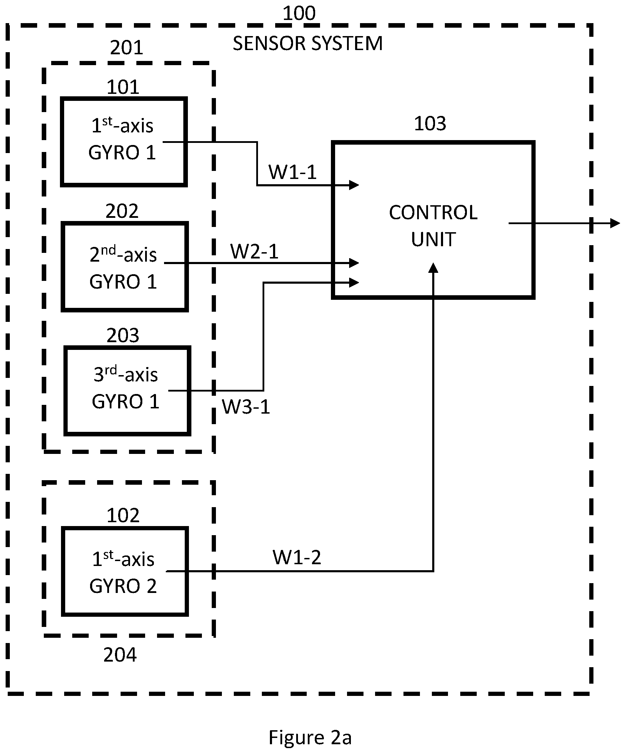

The sensor system may further comprise a first sensor unit 201, as illustrated in Figure 2a. The first sensor unit 201 may comprise the first first-axis gyroscope 101 described above.

The first sensor unit 201 may further comprise a first second-axis gyroscope 202. The first second-axis gyroscope 202 may be configured to measure a first angular rate of rotation about a second axis. The first second-axis gyroscope 202 may be configured to generate a first second-axis angular rate of rotation signal W2-1.

The first sensor unit 201 may further comprise a first third-axis gyroscope 203. The first third-axis gyroscope 203 may be configured to measure a first angular rate of rotation about a third axis. The first third-axis gyroscope 203 may be configured to generate a first third-axis angular rate of rotation signal W3-1.

Both the first second-axis gyroscope 202 and the first third-axis gyroscope 203 may operate according to either amplitude or frequency modulation principle and comprise either capacitive or piezoelectric transducer.

The first axis, the second axis and the third axis may be perpendicular to each other.

The sensor system may further comprise a second sensor unit 204. The second sensor unit 204 may comprise the second first-axis gyroscope 102 which is described above.

Optionally, the second sensor unit 204 may comprise a second second-axis gyroscope and a second third-axis gyroscope (not illustrated). The transducer type of the first second-axis gyroscope 202 may be different from the second second-axis gyroscope and/or the operation principle of the first second-axis gyroscope 202 may be different from the operation principle of the second second-axis gyroscope. The transducer type of the first third-axis gyroscope 203 may be different from the second third-axis gyroscope and/or the operation principle of the first third-axis gyroscope 203 may be different from the operation principle of the second third-axis gyroscope.

The control unit 103 of the sensor system, illustrated in Figure 2a, may be configured to retrieve the first second-axis angular rate of rotation signal W2-1, the first third-axis angular rate of rotation signal W3-1 and the first first-axis angular rate of rotation signal W1-1 from the first sensor unit 201. The control unit may further be configured to retrieve the second first-axis angular rate of rotation signal W1-2 from the second sensor unit 204. The control unit 103 may further be configured to combine signals W1-1, W3-1, W2-1 and W1-2 into a combined angular rate of rotation signal W, and to output the combined angular rate of rotation signal W.

The first sensor unit 201 may comprise three gyroscopes as disclosed above: the first first-axis gyroscope 101, the first second-axis gyroscope 202, and the first third-axis gyroscope 203. Depending on the operation principle of the first first-axis gyroscope, the arrangement of the transducer(s) in the gyroscopes may vary:
1) The first first-axis gyroscope 101, the first second-axis gyroscope 202 and the first third-axis gyroscope 203 may be a single gyroscope which is capable of measuring angular rotation about three mutually perpendicular axes. In other words, first first-axis gyroscope 101, the first second-axis gyroscope 202 and the first third-axis gyroscope 203 may be a single multi-axis gyroscope.
2) The first sensor unit 201 may comprise three separate gyroscopes: the first first-axis gyroscope 101, the first second-axis gyroscope 202, and the first third-axis gyroscope 203, and each of these may dedicated to measuring angular rotation about a specific axis. The axes may be perpendicular to each other. In other words, the first first-axis gyroscope 101, the first second-axis gyroscope 202, and the first third-axis gyroscope 203 may each be separate device, in particular each of the gyroscopes can be a single-axis gyroscope.

The second sensor unit may further comprise the second second-axis gyroscope and the second third-axis gyroscope, and the control unit may be further configured to retrieve a second second-axis angular rate of rotation signal W2-2 from the second sensor unit and a second third-axis angular rate of rotation signal W3-2 from the second sensor unit, and to combine the signals W2-1 and W2-2 into the combined second-axis angular rate of rotation signal W2, and to combine the signals W3-1 and W3-2 into the combined third-axis angular rate of rotation signal W3, and to output the signals W1, W2 and W3.

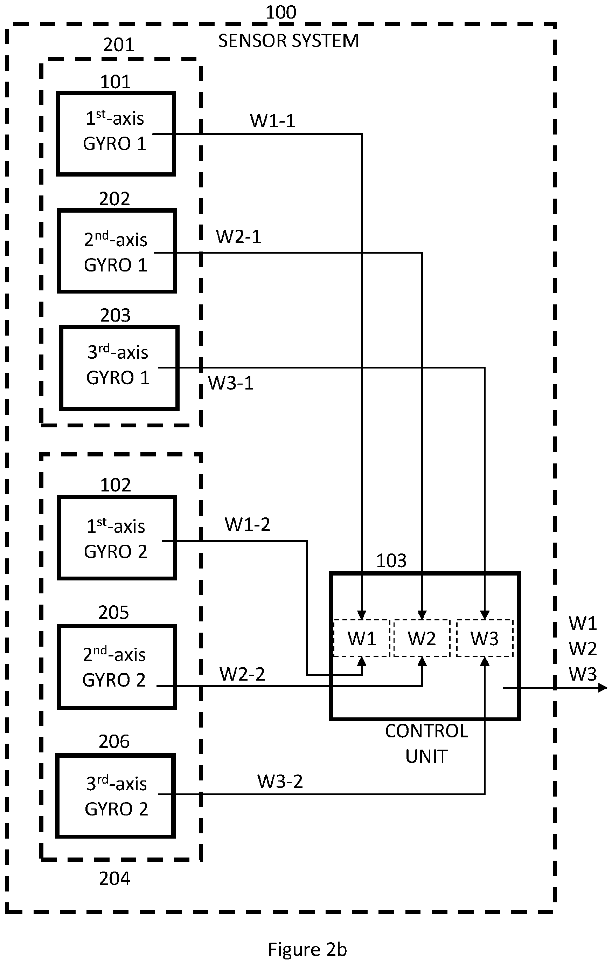

Figure 2b illustrates the sensor system which further comprises a second second-axis gyroscope 205 and a second third-axis gyroscope 206 in the second sensor unit 204. The control unit 103 of the sensor system, illustrated in Figure 2b, may be configured to retrieve the first second-axis angular rate of rotation signal W2-1, the first third-axis angular rate of rotation signal W3-1 and the first first-axis angular rate of rotation signal W1-1 from the first sensor unit 201. The control unit may further be configured to retrieve the second first-axis angular rate of rotation signal W1-2, the second second-axis angular rate of rotation signal W2-2 and the second third-axis angular rate of rotation signal W3-2 from the second sensor unit 204. The control unit 103 may further be configured to combine:
- signals W1-1 and W1-2 into a combined first-axis angular rate of rotation signal W1,
- signals W2-1 and W2-2 into a combined second-axis angular rate of rotation signal W2,
- and signals W3-1 and W3-2 into a combined third-axis angular rate of rotation signal W3.

The control unit 103 may further be configured to output the combined first, second and third angular rate of rotation signals W1, W2 and W3.

### Accelerometers

The first sensor unit may further comprises a three-axis acceleration sensor, wherein the three-axis acceleration sensor is configured to measure a rate of change of velocity along the second axis, a rate of change of velocity along the third axis, and a rate of change of velocity along the first axis, and wherein the three-axis acceleration sensor is configured to generate a second-axis rate of change of velocity signal A2, a third-axis rate of change of velocity signal A3, and a first-axis rate of change of velocity signal A1, and wherein the control unit is configured to retrieve the second-axis rate of change of velocity signal A2, the third-axis rate of change of velocity signal A3, and the first-axis rate of change of velocity signal A1, and to output them.

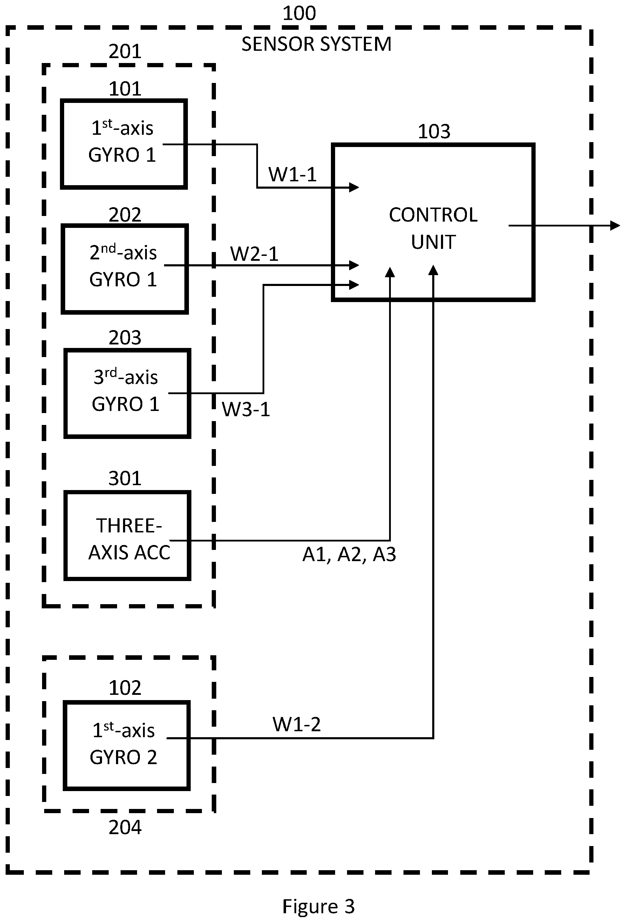

The first sensor unit 201 of the sensor system may comprise a three-axis acceleration sensor 301, as illustrated in Figure 3. The three-axis acceleration sensor 301 may be configured to measure a rate of change of velocity along the second axis, a rate of change of velocity along the third axis, and a rate of change of velocity along the first axis. The three-axis acceleration sensor 301 may be configured to generate a second-axis rate of change of velocity signal A2, a third-axis rate of change of velocity signal A3, and a first-axis rate of change of velocity signal A1.

The first axis, the second axis and the third axis of the accelerometer may correlate with the first axis, the second axis and the third axis of the gyroscopes described above.

The control unit 103 may be configured to retrieve the second-axis rate of change of velocity signal A2, the third-axis rate of change of velocity signal A3, and the first-axis rate of change of velocity signal A1, and to output them.

### ASIC

The sensor system may further comprise a first application-specific integrated circuit, and wherein the control unit is configured to retrieve the signals W2-1, W3-1, W1-1, A2, A3 and A1 via the first application-specific integrated circuit. The control unit may be configured to retrieve the signal W1-2 directly from the second first-axis gyroscope.

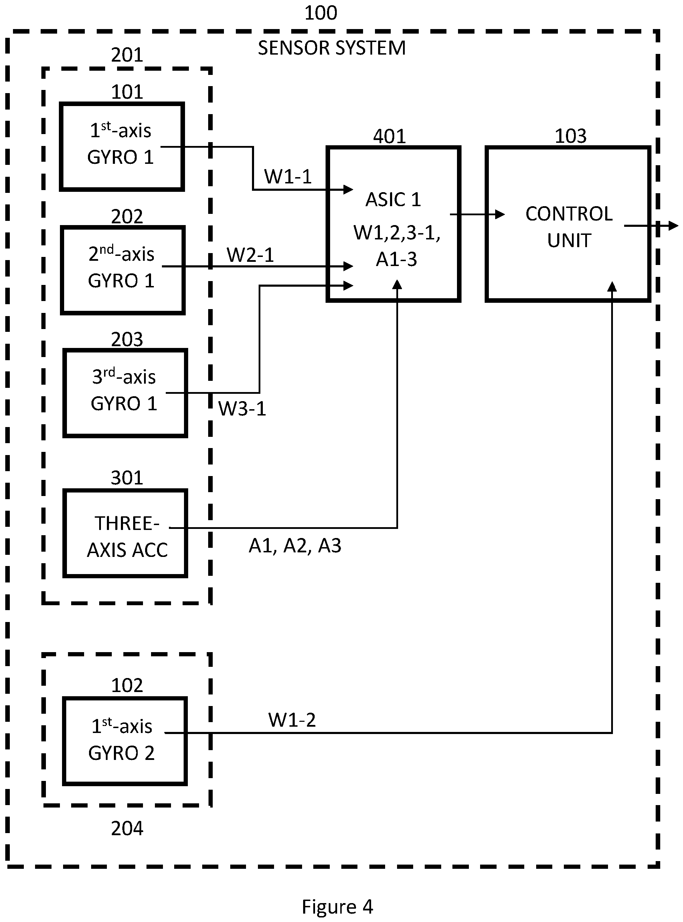

The sensor system may comprise a first application-specific integrated circuit (ASIC), as illustrated in Figure 4. The control unit may thus be configured to retrieve the signals W1-1, W2-1, W3-1, A1, A2 and A3 via the first ASIC. In other words, the signals W1-1, W2-1, W3-1, A1, A2 and A3 may first be retrieved from the first sensor unit 201 by the first ASIC prior to retrieval by the control unit 103. Specifically, the first ASIC may be configured to drive the first gyroscopes, to process the first angular rate of rotation signals and to digitally output the first angular rate of rotation signals W1-1, W2-1, W3-1 and the rate of change of velocity signals A1, A2, A3.

The control unit may retrieve the signal W1-2 directly from the second first-axis gyroscope 102. In other words, the signal W1-2 may be directly passed from the second first-axis gyroscope 102 to the control unit 103 without any additional processing unit in-between. Alternatively, there may be amplifiers and buffers in-between the control unit 103 and the second first-axis gyroscope 102. The control unit 103 can at least partly control the drive function of the drive transducer(s).

The sensor system may further comprise a second application-specific integrated circuit, and wherein the control unit is configured to retrieve the signal W1-2 via the second application-specific integrated circuit.

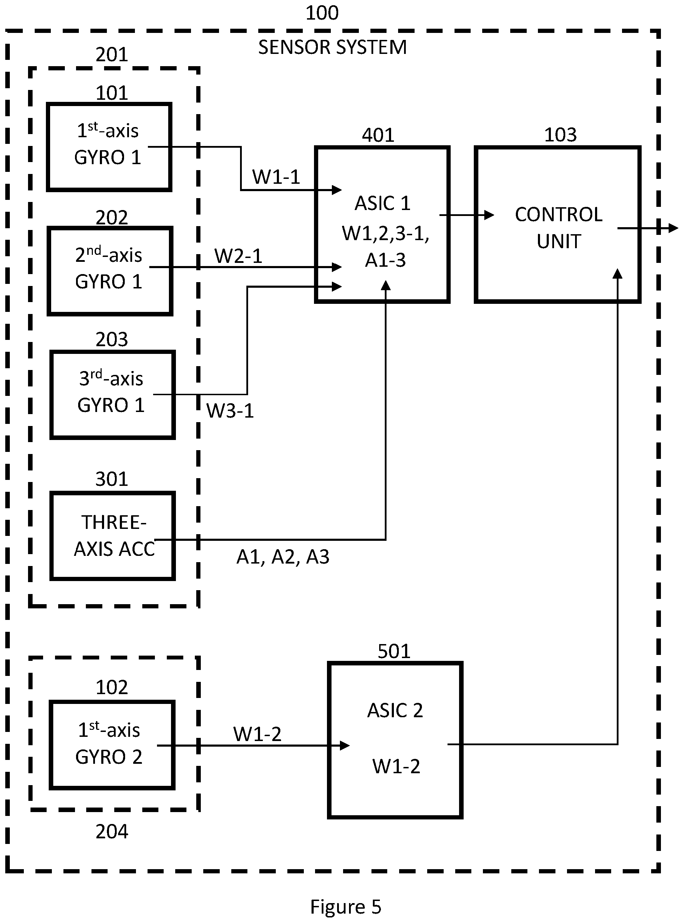

The control unit 103 may be configured to retrieve the signal W1-2 from the second first-axis gyroscope 102 via a second application-specific integrated circuit, as illustrated in Figure 5. In other words, the signal W1-2 may first be retrieved from the second sensor unit 204 by the second ASIC prior to retrieval by the control unit 103. The second ASIC may be configured to drive the second gyroscope, to process the second angular rate of rotation signal and to digitally output the second angular rate of rotation signals W1-2. The second ASIC may be analog front-end ASIC.

### Axes definition

Throughout this disclosure, the first axis in this disclosure may correspond to a vertical z-axis. The vertical z-axis may be aligned with a direction of gravity of the Earth. The vertical z-axis may be the axis pointing upwards or downwards on the face of the Earth. The second axis and the third axis may correspond to an x-axis and a y-axis accordingly. The x-axis and the y-axis may be orthogonal to the vertical z-axis, and they may be horizontal on the face of the Earth. The vertical z-axis may be referred to as *"*z-axis*"* or "vertical axis" in this application text. Alternatively, the first axis may correspond to the x-axis or the y-axis.

The first axis may alternatively be oriented in any direction. In other words, the angle between the first axis and the direction of gravity may alternatively obtain any value. The second and third axes may be perpendicular to the first axis and to each other.

### Examples of gyroscopes

### Example 1

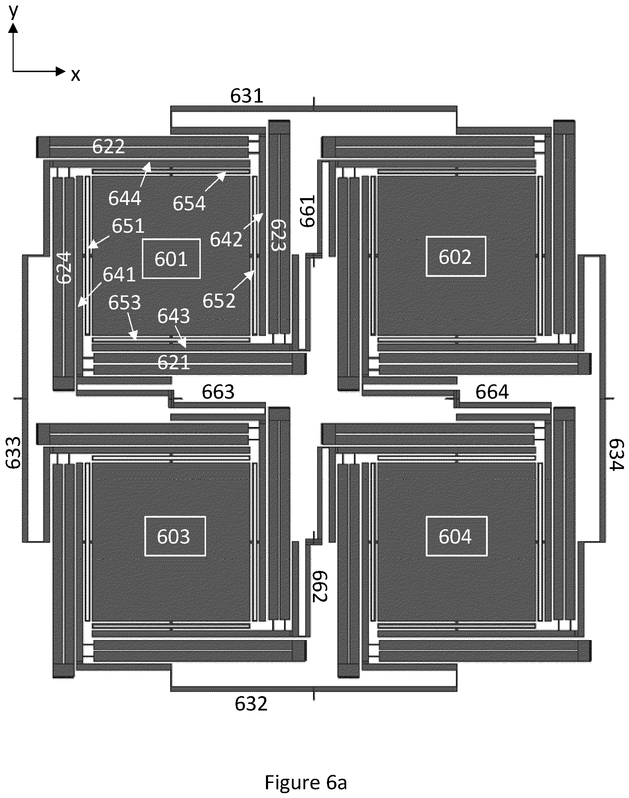

One example of the gyroscope with piezoelectric transducer is illustrated in Figure 6a. The gyroscope of Figure 6a may comprise four proof masses 601-604, each of which may comprise a piezoelectric transduction/suspension structure. The four proof masses 601-604 may be connected to each other with beams 661-664. Each transduction/suspension structure may comprise two elongated beams 621-624. The elongated beams 621-624 may be attached to a coupler 641-644. Each transduction/suspension structure may also comprise a coupling spring 651. Each transduction/suspension structure may also comprise a flexure 631-634. The bending of the elongated beam may move the coupler thus initiating the movement of the proof mass in a predefined direction.

The gyroscope may be operated according to the amplitude modulation principle by using piezoelectric transducers on beams 621 and 622 (and on other beams parallel to these) to drive the proof masses 601-604 in linear drive oscillation motion in the y-direction. If the gyroscope would undergo angular rotation about the z-axis, the Coriolis force may then induce linear sense oscillation in the x-direction, which may be detected with sense transducers on beams 623-624 (and on other beams parallel to these).

On the other hand, if this gyroscope is operated according to the frequency modulation principle, then the transducers on beams 621-624 will all contribute to drive the proof mass 601-604 in a circular motion in the xy-plane, which is a combination (superposition) of linear oscillation in the y-direction and linear oscillation in the x-direction. If the gyroscope undergoes angular rotation about the z-axis, the Coriolis force would change the frequency of this circular movement, and this may be detected with transducers on beams 621-624.

The idea of this example is that the oscillation of the proof mass is produced by the piezoelectric transducers while both amplitude and frequency modulated operation principles may be used to sense the angular rate of rotation.

### Example 2

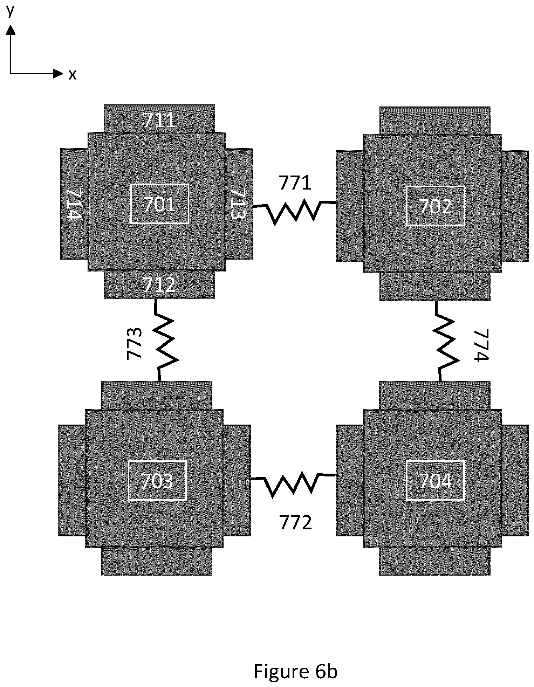

One example of the gyroscope with capacitive transducer is illustrated in Figure 6b. The gyroscope of Figure 6b may comprise four proof masses 701-704, each of which may comprise four capacitive transduction/sensing structures such as 711-714. The four proof masses 701-704 may be connected to each other with coupling spring structures 771-774. The coupling spring structures may, for example, be coupling flexures.

Each capacitive transduction/sensing structure, such as 711-714, may comprise fixed combs (not illustrated in Figure 6b), which are interdigitated with movable combs formed on the mass 701 (finger capacitor). Alternatively, each capacitor could comprise a plate (not illustrated in Figure 6b), which is parallel to the edge of the mass 701 (parallel-plate capacitor). Capacitors 711-712 may generate or measure movement in the y-direction, while capacitors 713-714 may generate or measure movement in the x-direction.

The gyroscope with capacitive transduction/sensing structures may be operated according to the amplitude modulation principle by using capacitive drive transducers of transduction/sensing structures to drive the proof masses 701-704 in linear drive oscillation motion in the y-direction. If the gyroscope would undergo angular rotation about the z-axis, the Coriolis force may then induce linear sense oscillation in the x-direction, which may be detected with sense transducers of transduction/sensing structures.

On the other hand, if this gyroscope is operated according to the frequency modulation principle, then the drive transducers of the transduction/sensing structures will contribute to drive the proof masses 701-704 in a circular motion in the xy-plane, which is a combination (superposition) of linear oscillation in the y-direction and linear oscillation in the x-direction. If the gyroscope undergoes angular rotation about the z-axis, the Coriolis force would change the frequency of this circular movement, and this may be detected with sense transducers transduction/sensing structures. The idea of this example is that the oscillation of the proof mass is produced by the capacitive transducers while both amplitude and frequency modulated operation principles may be used to sense the angular rate of rotation.

### Method of signal processing

A method to measure angular rate of rotation about a first axis by a sensor system comprising a first first-axis gyroscope, which is configured to measure a first angular rate of rotation about the first axis, and generate a first first-axis angular rate of rotation signal W1-1; and a second first-axis gyroscope, which is configured to measure a second angular rate of rotation about the first axis, and generate a second first-axis angular rate of rotation signal W1-2; wherein each of the first and the second first-axis gyroscope comprises a transducer of a capacitive type or a piezoelectric type; and wherein each of the first and the second first-axis gyroscope operate according to either frequency modulated operation principle or amplitude modulated operation principle; wherein the transducer type of the first first-axis gyroscope is different from the second first-axis gyroscope and/or the operation principle of the first first-axis gyroscope is different from the operation principle of the second first-axis gyroscope; comprising method steps of retrieving the first first-axis angular rate of rotation signal W1-1 from the first first-axis gyroscope and the second first-axis angular rate of rotation signal W1-2 from the second first-axis gyroscope, and combining them into a combined first-axis angular rate of rotation signal W1, and outputting the combined angular rate of rotation signal W1.

A method of determining angular rate of rotation about a first axis by a sensor system described above in this disclosure, may comprise the following steps:
1) Acquiring the first first-axis angular rate of rotation signal W1-1 from the first first-axis gyroscope.
2) Acquiring the second first-axis angular rate of rotation signal W1-2 from the second first-axis gyroscope.
3) Combining the signals W1-1 and W1-2 in the control unit and producing the combined angular rate of rotation signal W1.
4) Outputting the combined angular rate of rotation signal W1 by the control unit.

## Claims

1. A sensor system configured to measure angular rate of rotation about a first axis, comprising:
• a first first-axis gyroscope, which is configured to measure a first angular rate of rotation about the first axis, and generate a first first-axis angular rate of rotation signal W1-1;
• and a second first-axis gyroscope, which is configured to measure a second angular rate of rotation about the first axis, and generate a second first-axis angular rate of rotation signal W1-2;
• a control unit, which is configured to retrieve the first first-axis angular rate of rotation signal W1-1 from the first first-axis gyroscope and the second first-axis angular rate of rotation signal W1-2 from the second first-axis gyroscope,
and combine them into a combined first-axis angular rate of rotation signal W1,
and output the combined angular rate of rotation signal W1;
wherein
each of the first and the second first-axis gyroscope comprises a transducer of a capacitive type or a piezoelectric type;
and wherein
each of the first and the second first-axis gyroscope operate according to either frequency modulated operation principle or amplitude modulated operation principle;
**characterized in that**
the transducer type of the first first-axis gyroscope is different from the second first-axis gyroscope
and/or the operation principle of the first first-axis gyroscope is different from the operation principle of the second first-axis gyroscope.

2. The sensor system according to claim 1, wherein the transducer type of the first first-axis gyroscope is same as the transducer type of the second first-axis gyroscope, and the operation principle of the first first-axis gyroscope is different from the operation principle of the second first-axis gyroscope.

3. The sensor system according to claim 1, wherein the transducer type of the first first-axis gyroscope is different from the transducer type of the second first-axis gyroscope, and wherein the operation principle of the first first-axis gyroscope is same as the operation principle of the second first-axis gyroscope.

4. The sensor system according to claim 1, wherein the transducer type of the first first-axis gyroscope is different from the transducer type of the second first-axis gyroscope, and wherein the operation principle of the first first-axis gyroscope is different from the operation principle of the second first-axis gyroscope.

5. The sensor system according to claim 1 or 4, wherein the transducer type of the first first-axis gyroscope is capacitive, and the transducer type of the second first-axis gyroscope is piezoelectric, and wherein the operation principle of the first first-axis gyroscope is amplitude modulated and the operation principle of the second first-axis gyroscope is frequency modulated.

6. The sensor system according to any of the claims 1-5, wherein:
• a noise density of the first angular rate of rotation signal W1-1 is 20% or less than the noise density of the second angular rate of rotation signal W1-2;
• and the bias error of the second angular rate of rotation signal W1-2 is at least 5 times less than the bias error of the first angular rate of rotation signal W1-1.

7. The sensor system according to any of the preceding claims, wherein the sensor system is also configured to measure angular rate of rotation about a second axis and a third axis, and the sensor system further comprises:
• a first sensor unit, wherein the first sensor unit comprises:
∘ a first second-axis gyroscope, which is configured to measure a first angular rate of rotation about a second axis, and to generate a first second-axis angular rate of rotation signal W2-1;
∘ a first third-axis gyroscope, which is configured to measure a first angular rate of rotation about a third axis, and to generate a first third-axis angular rate of rotation signal W3-1;
∘ and the first first-axis gyroscope;
• a second sensor unit, wherein the second sensor unit comprises the second first-axis gyroscope;
• a control unit, which is configured to retrieve
∘ the first second-axis angular rate of rotation signal W2-1, the first third-axis angular rate of rotation signal W3-1 and the first first-axis angular rate of rotation signal W1-1 from the first sensor unit,
∘ and a second first-axis angular rate of rotation signal W1-2 from the second sensor unit,
∘ and to combine the signals W1-1 and W1-2 into the combined first-axis angular rate of rotation signal W1,
∘ and to output the signals W1, W3-1 and W2-1;
and wherein the first axis, the second axis and the third axis are orthogonal to each other.

8. The sensor system according to claim 7, wherein the second sensor unit further comprises the second second-axis gyroscope and the second third-axis gyroscope, and wherein the control unit is further configured to
• retrieve a second second-axis angular rate of rotation signal W2-2 from the second sensor unit and a second third-axis angular rate of rotation signal W3-2 from the second sensor unit,
• and to combine the signals W2-1 and W2-2 into the combined second-axis angular rate of rotation signal W2,
• and to combine the signals W3-1 and W3-2 into the combined third-axis angular rate of rotation signal W3,
• and to output the signals W1, W2 and W3.

9. The sensor system of claim 7, wherein the first sensor unit further comprises a three-axis acceleration sensor, wherein the three-axis acceleration sensor is configured to measure a rate of change of velocity along the second axis, a rate of change of velocity along the third axis, and a rate of change of velocity along the first axis, and wherein the three-axis acceleration sensor is configured to generate a second-axis rate of change of velocity signal A2, a third-axis rate of change of velocity signal A3, and a first-axis rate of change of velocity signal A1, and wherein the control unit is configured to retrieve the second-axis rate of change of velocity signal A2, the third-axis rate of change of velocity signal A3, and the first-axis rate of change of velocity signal A1, and to output them.

10. The sensor system according to any of preceding claims, wherein the sensor system further comprises a first application-specific integrated circuit, and wherein the control unit is configured to retrieve the signals W2-1, W3-1, W1-1, A2, A3 and A1 via the first application-specific integrated circuit.

11. The sensor system according to any of preceding claims, wherein the control unit is configured to retrieve the signal W1-2 directly from the second first-axis gyroscope.

12. The sensor system according to any of claims 1-9, wherein the sensor system further comprises a second application-specific integrated circuit, and wherein the control unit is configured to retrieve the signal W1-2 via the second application-specific integrated circuit.

13. A sensor system according to any of the preceding claims, wherein the first rotation axis is aligned with a vertical z-axis, the second rotation axis is aligned with an x-axis, and the third rotation axis is aligned with a y-axis.

14. A method to measure angular rate of rotation about a first axis by a sensor system comprising
• a first first-axis gyroscope, which is configured to measure a first angular rate of rotation about the first axis, and generate a first first-axis angular rate of rotation signal W1-1;
• and a second first-axis gyroscope, which is configured to measure a second angular rate of rotation about the first axis, and generate a second first-axis angular rate of rotation signal W1-2;
• wherein each of the first and the second first-axis gyroscope comprises a transducer of a capacitive type or a piezoelectric type; and wherein each of the first and the second first-axis gyroscope operate according to either frequency modulated operation principle or amplitude modulated operation principle; wherein the transducer type of the first first-axis gyroscope is different from the second first-axis gyroscope and/or the operation principle of the first first-axis gyroscope is different from the operation principle of the second first-axis gyroscope;
comprising method steps of
• retrieving the first first-axis angular rate of rotation signal W1-1 from the first first-axis gyroscope and the second first-axis angular rate of rotation signal W1-2 from the second first-axis gyroscope,
• and combining them into a combined first-axis angular rate of rotation signal W1,
• and outputting the combined angular rate of rotation signal W1.
